# EUROPÄISCHE PATENTSCHRIFT

(11) **EP 2 909 501 B1**
(45) Veröffentlichungstag und Bekanntmachung des Hinweises auf die Patenterteilung: **11.12.2019**
(21) Anmeldenummer: 13799181.6
(22) Anmeldetag: 17.10.2013
(51) Int. Cl.: F16F 15/134, F16F 15/16

(54) **ZWEIMASSENSCHWUNGRAD UND DREHMOMENTÜBERTRAGUNGSEINRICHTUNG MIT ZWEIMASSENSCHWUNGRAD**
TWO-MASS FLYWHEEL AND TORQUE TRANSMISSION DEVICE HAVING A TWO-MASS FLYWHEEL
VOLANT MOTEUR À DOUBLE MASSE ET DISPOSITIF DE TRANSMISSION DE COUPLE DOTÉ D'UNE VOLANT MOTEUR À DOUBLE MASSE

(30) Priorität: 18.10.2012 DE 102012219046
(43) Veröffentlichungstag der Anmeldung: 26.08.2015
(73) Patentinhaber: Schaeffler Technologies AG & Co. KG, 91074 Herzogenaurach (DE)
(72) Erfinder: MENDE, Hartmut, 77815 Bühl (DE)
(86) Internationale Anmeldenummer: PCT/DE2013/200232
(87) Internationale Veröffentlichungsnummer: WO 2014/059987

(56) Entgegenhaltungen:
- DE-A1- 4 117 580
- DE-C2- 3 645 308
- DE-U1- 8 717 797
- GB-A- 2 217 429

## Beschreibung

Die Erfindung betrifft ein Zweimassenschwungrad mit einem eine primäre Schwungmasse aufweisenden Eingangsteil, und einem gegenüber diesem Eingangsteil begrenzt entgegen der Wirkung zumindest eines Energiespeichers, insbesondere einer Bogenfeder, verdrehbar gelagerten Ausgangsteil, das eine sekundären Schwungmasse aufweist, wobei der mindestens eine Energiespeicher vom Eingangsteil unter Ausbildung eines sich radial in Richtung des Energiespeichers erstreckenden Kanals umgriffen wird und ein Flansch des Ausgangsteils durch den Kanal bis an ein Ende des Energiespeichers reicht. In diesem Kanal ist eine Dichtmembran zwischen dem Flansch und einem der sekundären Schwungmasse zugewandten Teil des Eingangsteils vorgesehen, die den Energiespeicher abdichtend kapselt.

Aus der DE 10 2009 013 407 A1 ist ein Zweimassenschwungrad mit einer solchen Dichtmembran in einem solchen Kanal zwischen dem Flansch und einem der sekundären Schwungmasse zugewandten Teil des Eingangsteils bekannt. Diese Membran ist am Ausgangsteil mittels einer Nietverbindung fest aufgenommen und liegt dichtend an dem der sekundären Schwungmasse zugewandten Teil an.

DE3645309 C2 offenbart ebenso ein Zweimassenschwungrad mit einer Dichtmembran.

Es ist die Aufgabe der Erfindung eine Zweimassenschwungrad und eine Drehmomentübertragungseinrichtung mit Zweimassenschwungrad anzugeben, die einfach herstellbar und schmutz- und feuchtigkeitsunempfindlicher sind.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils einzeln oder in Kombination einen Aspekt der Erfindung darstellen können.

Das erfindungsgemäße Zweimassenschwungrad weist ein eine primäre Schwungmasse aufweisendes Eingangsteil und ein gegenüber diesem Eingangsteil begrenzt entgegen der Wirkung zumindest eines Energiespeichers verdrehbar gelagerten Ausgangsteil auf, das seinerseits eine sekundären Schwungmasse umfasst. Der mindestens eine Energiespeicher wird vom Eingangsteil unter Ausbildung eines sich radial in Richtung des Energiespeichers erstreckenden Kanals umfasst. Ein Flansch des Ausgangsteils reicht durch den Kanal bis an ein Ende des Energiespeichers. In dem Kanal ist eine Dichtmembran zwischen dem Flansch und einem der sekundären Schwungmasse zugewandten Teil des Eingangsteils vorgesehen, die den Energiespeicher abdichtend kapselt, wobei die Dichtmembran einerseits mit dem der sekundären Schwungmasse zugewandten Teil des Eingangsteils stoffschlüssig verbunden ist und sich andererseits an einem am Flansch befestigten Reibring, insbesondere Kunststoffreibring, oder direkt an dem Flansch abstützt. Die stoff-schlüssige Verbindung zwischen der Dichtmembran und dem Teil des Eingangsteils ist insbesondere eine Schweißverbindung. Das der sekundären Schwungmasse zugewandte Teil ist insbesondere als Deckel des Energiespeichers ausgebildet. Der mindestens eine Energiespeicher ist insbesondere als Bogenfeder ausgebildet. Der Kanal wird dann auch als Bogenfederkanal bezeichnet.

Dadurch, dass das die Dichtmembran nun an dem der sekundären Schwungmasse zugewandten Teil befestigt ist, kann die Membran deutlich einfacher befestigt werden. Dazu wird die Membran an besagtem Teil des Eingangsteils befestigt und anschließend das Teil am Rest des Eingangsteils.

Im Zusammenhang mit dieser Erfindung wird das Zweimassenschwungrad auch kurz als Dämpfer bezeichnet, da es zur Dämpfung von Drehschwingungsdämpfungen in einem entsprechenden Drehmomentübertragungsstrang (Antriebsstrang) dient.

Gemäß einer bevorzugten Ausgestaltung der Erfindung ist vorgesehen, dass der Bereich der stoffschlüssigen Verbindung zwischen Dichtmembran und dem der sekundären Schwungmasse zugewandten Teil radial weiter außen liegt, als der Abstützbereich der Dichtmembran an dem Reibring oder an dem Flansch. Da die Reibstelle der Membran gegenüber den aus dem Stand der Technik bekannten Reibstellen radial weit innen liegt, wird eine deutlich bessere Wirkung gegenüber einer eindringenden Wassersäule oder Schmutz erreicht.

Es ist insbesondere vorgesehen, dass das der sekundären Schwungmasse zugewandte Teil partielle Öffnungen unterhalb der Dichtmembran aufweist. Durch diese Maßnahme wird erreicht, dass ein Anstauen von Wasser oder Schmutz an der Verbindungsstelle unterdrückt oder sogar verhindert wird.

Gemäß einer weiteren bevorzugten Ausgestaltung der Erfindung weist die Lagervorrichtung zur Lagerung des Ausgangsteils ein Gleitlager und einen axialen Reibring (Anlaufring) aus einem Kunststoffmaterial mit hoher Festigkeit, insbesondere aus Polyetheretherketon (PEEK), auf. Analysen von Rückläuferteilen "aus dem Feld" mit hohen Gebrauchsdauern zeigen Verschleiß beziehungsweise Totalverlust des axialen Anlaufringes am Gleitlager. Durch Einsatz eines Kunststoffmaterials mit hoher Festigkeit wie zum Beispiel PEEK kann die Lagerlebensdauer erhöht werden. Dafür muss jedoch gegebenenfalls eine Erhöhung der axialen Lagerreibung in Kauf genommen werden.

Alternativ kann auf den axialen Kunststoffreibring auch ganz verzichtet werden. Gemäß einer alternativen bevorzugten Ausführungsform der Erfindung ist die Lagervorrichtung zur Lagerung des Ausgangsteils als Gleitlager ausgebildet, das selbst eine axiale Anlagefläche zur Axialunterstützung bildet. Dazu muss die axiale Anlagefläche des Lagers am Eingangsteil eine sehr gute Geradheit und geringe Oberflächenrauigkeit aufweisen.

Bei sehr kurzen Radiallagern zeigen sich zudem radialer Lagerverschleiß und starke Taumelbewegungen der sekundären Schwungmasse. Das Radiallager sollte daher eine Mindestlänge Lₘᵢₙ von 10 mm, bezogen auf den Tragbereich des Radiallagers, aufweisen. Das Radiallager sollte also bevorzugt eine axiale Länge L mit L ≥ 10 mm aufweisen.

Gemäß einer weiteren bevorzugten Ausführungsform der Erfindung ist vorgesehen, dass zwischen dem Eingangsteil und dem Ausgangsteil mindestens eine Eingriff-Struktur ausgebildet ist, bei der ein Anschlag des einen dieser beiden Teile (des Eingangs- oder des Ausgangsteils) mit einer Gegenstruktur des anderen dieser beiden Teile (des Ausgangs- oder des Eingangsteils) bei einem Überschreiten eines Wirkweges des Energiespeichers zur Drehmitnahme in Eingriff kommt. Fällt der Energiespeicher aus, so ist auch für diesen Fall eine Drehmomentübertragung sichergestellt. Derartige Eingriff-Strukturen können auch für andere drehmomentführende Teile vorgesehen sein.

Ein solches Eingreifen ermöglicht auch bei Ausfall von drehmomentführenden Teilen (wie dem als Bogenfeder ausgebildeten Energiespeicher, dem Flansch oder einer Vernietung von Flansch und sekundärer Schwungmasse) eine kurzzeitige Momentenübertragung. Diese Momentübertragung per Eingriff-Struktur ist allerdings mit Komfort-Einbußen verbunden. So entsteht eine so genannte "Limp-Home-Funktion".

In einer vorteilhaften Ausgestaltung dieser Ausführungsform weist der der sekundären Schwungmasse zugewandte Teil des Eingangsteils mindestens ein Anschlag (eine Anschlagsstruktur) zum Eingreifen in Ausnehmungen des Ausgangsteils, insbesondere der sekundären Schwungmasse, auf. Dabei greifen beispielsweise Anschläge am Deckel des Energiespeichers in Ausnehmungen der sekundären Schwungmasse. Die Anschläge sind so ausgelegt, dass sie erst nach Überschreiten der Dämpfer-Verdrehkennlinie in Eingriff mit den Ausnehmungen kommen.

Gemäß noch einer weiteren bevorzugten Ausführungsform der Erfindung ist vorgesehen, dass das Eingangsteil ein Element aufweist, das in radialer Gegenüberlage zu dem Flansch oder der sekundären Schwungmasse steht und ein radialer Abstand zwischen dem Element einerseits und dem Flansch und/oder der sekundären Schwungmasse andererseits 0.3 bis 1.0 mm beträgt. Das Element ist vorzugsweise als primärseitiger Lagerdom als oder primärseitig angeordnete Stützscheibe ausgebildet. Beabstandungen mit geringem Spalt zwischen Flansch (oder sekundärer Schwungmasse) zu Lagerdom (oder primärseitig angeordneter Stützscheibe) übernehmen nach Ausfall des Lagers kurzzeitig die radiale Zentrierung von Sekundärseite zu Primärseite. Je nach Größe der Beabstandung kann damit auch das Lagertaumeln im normalen Betrieb des Lagers begrenzt werden.

Insbesondere ist vorgesehen, dass das Zweimassenschwungrad mindestens eine temperaturempfindliche Farbmarkierung, insbesondere im Kanal und/oder an der Lagervorrichtung, aufweist. Mittels solcher temperaturempfindlichen Farbmarkierungen (Farbpunkte) an exponierten Stellen im/am Zweimassenschwungrad (zum Beispiel am Kanal, dem Lager, RSS oder ähnlichen kritischen Stellen) kann eine Verwendung des Zweimassenschwungrades außerhalb der- laut Pflichtenheft oder Zeichnung- maximal zulässigen Temperaturgrenzen nachgewiesen und Gewährleistungsansprüche abgelehnt werden.

Weiterhin ist mit Vorteil vorgesehen, dass das Zweimassenschwungrad mindestens eine Dämpfungsfeder und/oder mindestens eine Anlaufbegrenzungseinrichtung zwischen sekundärer Schwungmasse und dem der sekundären Schwungmasse zugewandten Teil des Eingangsteils aufweist. Durch diese Maßnahmen ist eine weitere Robustheitssteigerung des Zweimassenschwungrades erreichbar.

Die Erfindung betrifft weiterhin eine Drehmomentübertragungseinrichtung mit einem vorstehend genannten Zweimassenschwungrad. Diese Drehmomentübertragungseinrichtung ist insbesondere eine Reibungskupplung. Dabei bildet die sekundäre Schwungmasse bevorzugt eine Gegenplatte der Kupplung oder ist mit der Gegenplatte fest verbunden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: ein Zweimassenschwungrad gemäß einer bevorzugten Ausführungsform der Erfindung und
- Fig. 2:: Details einer alternativen Ausführungsform.

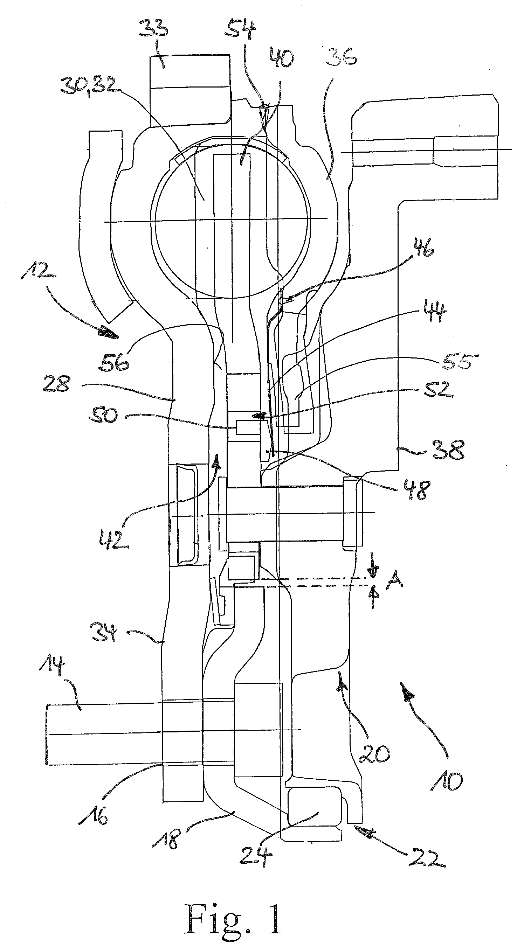

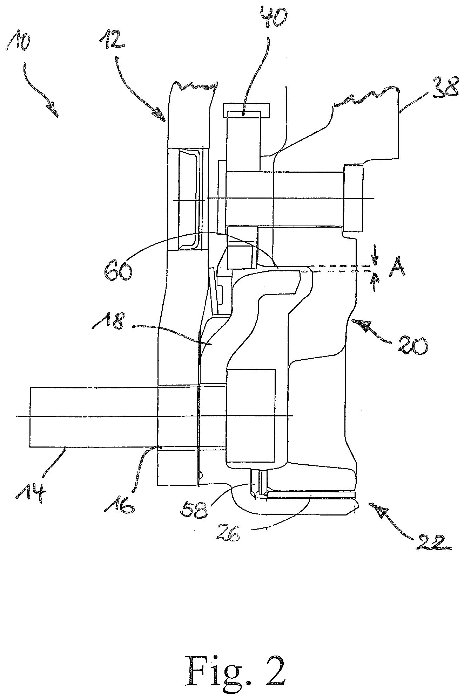

Die Fig. 1 zeigt ein Zweimassenschwungrad 10 im Schnitt, wobei lediglich die obere Hälfte (oberhalb der Rotationsachse des Zweimassenschwungrades 10) dargestellt ist. Ein Eingangsteil 12 des Zweimassenschwungrades 10 ist mittels Schrauben 14, die durch über den Umfang verteilte Durchbrüche 16 geführt sind, an einer (nicht dargestellten) Kurbelwelle einer Brennkraftmaschine anbringbar. Das Eingangsteil 12 weist einen Lagerflansch 18 zur verdrehbaren Aufnahme eines Ausgangsteils 20 mittels einer Lagervorrichtung 22, die - wie in Fig. 1 gezeigt - ein Wälzlager 24 oder - wie in Fig. 2 gezeigt - ein Gleitlager 26 sein kann, ein Scheibenteil 28 zur Aufnahme von Energiespeichern 30, die in dem gezeigten Ausführungsbeispiel durch Bogenfedern 32 gebildet sind, und einen (Anlasser)Zahnkranz 33 auf.

Die primäre Schwungmasse 34 des Zweimassenschwungrades 10 wird im Wesentlichen durch das Scheibenteil 28, einem mit diesem Scheibenteil 28 zur Bildung der Aufnahme der Energiespeicher 30 verbundenen weiteren Teil 36 und dem Zahnkranz 33 gebildet. Die Teile 28, 36 weisen jeweils Einformungen auf, die axial in mit den Bogenfedern 32 belegte Freiräume eingreifen und die Bogenfedern 32 jeweils an deren stirnseitigen Enden in Umfangsrichtung antriebsseitig beaufschlagen.

Das Ausgangsteil 20 wird durch die auf der Lagervorrichtung 22 gelagerte sekundäre Schwungmasse 38, die eine Gegenplatte (Reibfläche) für eine nicht dargestellte Reibungskupplung bildet, und einen Flansch 40 gebildet, der die Bogenfedern 32 stirnseitig abtriebsseitig beaufschlagt. Die sekundäre Schwungmasse 38 und der Flansch 40 sind mittels Nietverbindung miteinander verbunden. Bei einer Relativverdrehung von Eingangsteil 12 zu Ausgangsteil 20 - beispielsweise infolge von Drehungleichförmigkeiten der Brennkraftmaschine - werden die als Bogenfedern 32 ausgebildeten Energiespeicher 30 komprimiert, speichern die eingetragene Energie und geben diese bei Abklingen der Drehungleichförmigkeiten wieder ab.

Das Teil 36 ist ein der sekundären Schwungmasse 38 zugewandtes Teil 36 des Eingangsteils 12, das die Energiespeicher 30 mittels seiner beiden Teile 28, 36 unter Ausbildung eines sich radial in Richtung des Energiespeichers 30 erstreckenden Kanals 42 umgreift. Es ist im vorliegenden Fall als Deckel 36 des Energiespeichers 30 ausgebildet. Der Flansch 40 des Ausgangsteils 20 durchgreift diesen Kanal 42 und reicht an ein Ende der als Bogenfedern ausgebildeten Energiespeicher 30. In dem Kanal 42 ist eine Dichtmembran 44 zwischen dem Flansch 40 und dem der sekundären Schwungmasse 38 zugewandten Teil 36 des Eingangsteils 12 angeordnet. Diese Dichtmembran 44 kapselt die Energiespeicher 30 dichtend gegen äußere Einflüsse, wie Wasser und/oder Schmutz.

Dabei ist die Dichtmembran 44 mit dem der sekundären Schwungmasse zugewandten Teil 36 des Eingangsteils 12 durch eine als Schweißverbindung ausgebildete Verbindung 46 auf der einen Seite stoffschlüssig verbunden und stützt sich mit ihrer anderen Seite an einem am Flansch 40 befestigten Kunststoffreibring 48 ab. Zur Befestigung und/oder Positionierung des Reibrings 48 am Flansch 40 greifen Fortsätze 50 in Ausnehmungen 52 in dem Flansch 40 ein. Diese Ausnehmungen 52 sind im Beispiel als Durchbrüche ausgebildet.

Der Bereich der stoffschlüssigen Verbindung 46 zwischen Dichtmembran 44 und dem der sekundären Schwungmasse 38 zugewandten Teil 36 liegt radial weiter außen als der Abstützbereich (Reibbereich) der Dichtmembran 44 an dem Reibring 48. Dabei kann das der sekundären Schwungmasse 38 zugewandte Teil 36 partielle Öffnungen unterhalb der Dichtmembran 44 aufweisen. Das der sekundären Schwungmasse 38 zugewandte Teil 36 selbst ist mittels einer Schweißverbindung 54 am Scheibenteil 28 befestigt.

Zwischen dem Eingangsteil 12 und dem Ausgangsteil 20 ist mindestens eine Eingriff-Struktur 55 ausgebildet, bei der ein Anschlag des einen dieser beiden Teile 12, 20 mit einer Gegenstruktur des anderen dieser beiden Teile 20, 12 bei einem Überschreiten eines Wirkweges des Energiespeichers 30 zur Drehmitnahme in Eingriff kommt. Fällt der Energiespeicher 30 aus, so ist auch für diesen Fall eine Drehmomentübertragung sichergestellt. Derartige Eingriff-Strukturen 55 können auch für andere drehmomentführende Teile (dem Flansch 40 oder einer Vernietung von Flansch und sekundärer Schwungmasse 38) vorgesehen sein. Es entsteht eine so genannte "Limp-Home-Funktion". Eine Momentübertragung mittels der Eingriff-Struktur 55 ist zumeist mit Komfort-Einbußen verbunden. Im gezeigten Beispiel ist die Eingriff-Struktur 55 zwischen der sekundären Schwungmasse 38 des Ausgangsteils 20 und dem der sekundären Schwungmasse 38 zugewandte Teil 36 des Eingangsteils 12 gebildet.

Im Kanal 42 ist eine temperaturempfindliche Farbmarkierung 56 angeordnet. Mittels dieser temperaturempfindlichen Farbmarkierung (Farbpunkt) an exponierten Stellen im Zweimassenschwungrad kann die Verwendung des Zweimassenschwungrades 10 außerhalb der- laut Pflichtenheft oder Zeichnung- maximal zulässigen Temperaturgrenzen nachgewiesen und gegebenenfalls Gewährleistungsansprüche abgelehnt werden.

Der Lagerflansch 18 des Eingangsteils 12 steht radial in Gegenüberlage zu dem Flansch 40. Der radiale Abstand A zwischen dem Lagerflansch 18 einerseits und dem Flansch 40 andererseits beträgt etwa 0.8 mm.

Die Fig. 2 zeigt eine alternative Ausgestaltung des Zweimassenschwungrades 10 im Bereich der Lagervorrichtung 22. Die Lagervorrichtung 22 weist in dieser Ausführungsform des Zweimassenschwungrades 10 das Gleitlager 26 (als Radiallager) mit einem axialen Reibring 54 aus einem Kunststoffmaterial mit hoher Festigkeit, nämlich Polyetheretherketon (PEEK), auf.

Der Lagerflansch 18 des Eingangsteils 12 steht mit einem abgewinkelten Bereich 60 radial in Gegenüberlage zu dem radial innenliegenden Endbereich des Flanschs 40 und einem entsprechenden Bereich der sekundären Schwungmasse 38. Der radiale Abstand A zwischen dem Lagerflansch 18 einerseits und der sekundären Schwungmasse 38 andererseits beträgt 0.4 mm. Das Gleitlager 26 hat eine Mindestlänge Lₘᵢₙ von 10 mm, bezogen auf den Tragbereich der Lagervorrichtung 22.

Insgesamt bewirken die genannten Maßnahmen eine Erhöhung der Systemrobustheit des Zweimassenschwungrades 10, nämlich:
- einer verbesserten Abdichtung des Bogenfederkanals 42,
- der Vermeidung von Verschleiß bei der Lagervorrichtung 22,
- einer "Limp home"-Funktion bei Verlust der Drehmomentübertragung,
- einer "Limp home"-Funktion bei Lagerausfall,
- der Möglichkeit eines Nachweises von unzulässigen Betriebstemperaturen und
- der Kombination dieser Maßnahmen mit bereits bekannten Maßnahmen: Dämpfungsfeder & Vermeidung von Lagerschäden in Folge von Taumelbewegungen durch Anlaufbegrenzer zwischen sekundärer Masse 38 und Deckel 36.

### Bezugszeichenliste

- 10: Zweimassenschwungrad
- 12: Eingangsteil
- 14: Schraube
- 16: Durchbruch
- 18: Lagerflansch
- 20: Ausgangsteil
- 22: Lagervorrichtung
- 24: Wälzlager
- 26: Gleitlager
- 28: Scheibenteil
- 30: Energiespeicher
- 32: Bogenfeder
- 33: Zahnkranz
- 34: primäre Schwungmasse
- 36: Teil
- 38: sekundäre Schwungmasse
- 40: Flansch
- 42: Kanal
- 44: Dichtmembran
- 46: Verbindung
- 48: Reibring
- 50: Fortsatz
- 52: Ausnehmung
- 54: Schweißverbindung
- 55: Eingriff-Struktur
- 56: Farbmarkierung
- 58: Reibring
- 60: Bereich
- A: Abstand

## Patentansprüche

1. Zweimassenschwungrad (10) mit einem eine primäre Schwungmasse (34) aufweisenden Eingangsteil (12), und einem gegenüber diesem Eingangsteil (12) begrenzt entgegen der Wirkung zumindest eines Energiespeichers (30), insbesondere einer Bogenfeder (32), verdrehbar gelagerten Ausgangsteil (20), das eine sekundären Schwungmasse (38) aufweist, wobei der mindestens eine Energiespeicher (30) vom Eingangsteil (12) unter Ausbildung eines sich radial in Richtung des Energiespeichers (30) erstreckenden Kanals (42) umgriffen wird und ein Flansch (40) des Ausgangsteils (20) durch den Kanal (40) bis an ein Ende des Energiespeichers (30) reicht und wobei in diesem Kanal (40) eine Dichtmembran (44) zwischen dem Flansch (40) und einem der sekundären Schwungmasse (38) zugewandten Teil (36) des Eingangsteils (12) vorgesehen ist, die den Energiespeicher (30) abdichtend kapselt, **dadurch gekennzeichnet, dass** die Dichtmembran (44) mit dem der sekundären Schwungmasse (38) zugewandten Teil (36) des Eingangsteils (12) stoffschlüssig verbunden ist und sich an einem am Flansch (40) befestigten Reibring (48) oder direkt an dem Flansch (40) abstützt.

2. Zweimassenschwungrad nach Anspruch 1, **dadurch gekennzeichnet, dass** der Bereich der stoffschlüssigen Verbindung (46) zwischen Dichtmembran (44) und dem der sekundären Schwungmasse (38) zugewandten Teil (36) radial weiter außen liegt, als der Abstützbereich der Dichtmembran (44) an dem Reibring (48) oder an dem Flansch (40).

3. Zweimassenschwungrad nach Anspruch 1 oder 2, **dadurch gekennzeichnet, dass** das der sekundären Schwungmasse (38) zugewandte Teil (36) partielle Öffnungen unterhalb der Dichtmembran (44) aufweist.

4. Zweimassenschwungrad nach einem der Ansprüche 1 bis 3, **dadurch gekennzeichnet, dass** eine Lagervorrichtung (22) zur Lagerung des Ausgangsteils (20) ein Gleitlager (26) und einen axialen Reibring (58) aus einem Kunststoffmaterial mit hoher Festigkeit, insbesondere aus Polyetheretherketon, aufweist.

5. Zweimassenschwungrad nach einem der Ansprüche 1 bis 3, **dadurch gekennzeichnet, dass** die Lagervorrichtung (22) zur Lagerung des Ausgangsteils (20) als Gleitlager (26) ausgebildet ist, welches selbst eine axiale Anlagefläche zur Axialunterstützung bildet.

6. Zweimassenschwungrad nach einem der Ansprüche 1 bis 5, **dadurch gekennzeichnet, dass** zwischen dem Eingangsteil (12) und dem Ausgangsteil (20) mindestens eine Eingriff-Struktur (55) ausgebildet ist, bei der ein Anschlag des einen dieser beiden Teile (12, 20) mit einer Gegenstruktur des anderen dieser beiden Teile (20, 12) bei einem Überschreiten eines Wirkweges des Energiespeichers (30) zur Drehmitnahme in Eingriff kommt.

7. Zweimassenschwungrad nach einem der Ansprüche 1 bis 6, **dadurch gekennzeichnet, dass** das Eingangsteil (12) ein Element (18) aufweist, das radial in Gegenüberlage zu dem Flansch (40) oder der sekundären Schwungmasse (38) steht und ein radialer Abstand (A) zwischen dem Element (18) einerseits und dem Flansch (40) und/oder der sekundären Schwungmasse (38) andererseits 0.3 mm bis 1.0 mm beträgt.

8. Zweimassenschwungrad nach einem der Ansprüche 1 bis 7, **gekennzeichnet durch** mindestens eine temperaturempfindliche Farbmarkierung (56), insbesondere im Kanal (42) und/oder an der Lagervorrichtung (22).

9. Zweimassenschwungrad nach einem der Ansprüche 1 bis 8, **gekennzeichnet durch** mindestens eine Dämpfungsfeder und/oder mindestens eine Anlaufbegrenzungseinrichtung zwischen sekundärer Schwungmasse (38) und dem der sekundären Schwungmasse (38) zugewandten Teil (36) des Eingangsteils (12).

10. Drehmomentübertragungseinrichtung, insbesondere Reibungskupplung, **gekennzeichnet durch** ein Zweimassenschwungrad (10) nach einem der Ansprüche 1 bis 9.

## Claims

1. Dual-mass flywheel (10) having an input part (12) which has a primary flywheel mass (34), and an output part (20) which is mounted such that it can be rotated with respect to the said input part (12) to a limited extent counter to the action of at least one energy store (30), in particular a bow spring (32), which output part (20) has a secondary flywheel mass (38), the at least one energy store (30) being engaged around by the input part (12) with the configuration of a channel (42) which extends radially in the direction of the energy store (30), and a flange (40) of the output part (20) reaching through the channel (40) as far as one end of the energy store (30), and a sealing diaphragm (44) being provided in the said channel (40) between the flange (40) and a part (36) of the input part (12), which part (36) faces the secondary flywheel mass (38), which sealing diaphragm (44) encapsulates the energy store (30) sealingly, **characterized in that** the sealing diaphragm (44) is connected in an integrally joined manner to that part (36) of the input part (12) which faces the secondary flywheel mass (38), and is supported directly on the flange (40) or on a friction ring (48) which is fastened to the flange (40).

2. Dual-mass flywheel according to Claim 1, **characterized in that** the region of the integrally joined connection (46) between the sealing diaphragm (44) and the part (36) which faces the secondary flywheel mass (38) lies radially further to the outside than the supporting region of the sealing diaphragm (44) on the friction ring (48) or on the flange (40).

3. Dual-mass flywheel according to Claim 1 or 2, **characterized in that** the part (36) which faces the secondary flywheel mass (38) has partial openings below the sealing diaphragm (44).

4. Dual-mass flywheel according to one of Claims 1 to 3, **characterized in that** a bearing apparatus (22) for mounting the output part (20) has a plain bearing (26) and an axial friction ring (58) made from a plastic material with a high strength, in particular made from polyether ether ketone.

5. Dual-mass flywheel according to one of Claims 1 to 3, **characterized in that** the bearing apparatus (22) for mounting the output part (20) is configured as a plain bearing (26) which itself forms an axial bearing face for axial support.

6. Dual-mass flywheel according to one of Claims 1 to 5, **characterized in that** at least one engagement structure (55) is configured between the input part (12) and the output part (20), in the case of which engagement structure (55) a stop of the one of the said two parts (12, 20) comes into engagement with a counter-structure of the other one of the said two parts (20, 12) for rotary driving if an active travel of the energy store (30) is exceeded.

7. Dual-mass flywheel according to one of Claims 1 to 6, **characterized in that** the input part (12) has an element (18) which lies radially opposite the flange (40) or the secondary flywheel mass (38), and a radial spacing (A) between the element (18) on one side and the flange (40) and/or the secondary flywheel mass (38) on the other side is from 0.3 mm to 1.0 mm.

8. Dual-mass flywheel according to one of Claims 1 to 7, **characterized by** at least one temperature-sensitive colour marking (56), in particular in the channel (42) and/or on the bearing apparatus (22).

9. Dual-mass flywheel according to one of Claims 1 to 8, **characterized by** at least one damping spring and/or at least one run-on limiting device between the secondary flywheel mass (38) and that part (36) of the input part (12) which faces the secondary flywheel mass (38).

10. Torque transmission device, in particular friction clutch, **characterized by** a dual-mass flywheel (10) according to one of Claims 1 to 9.

## Revendications

1. Volant d'inertie à deux masses (10) comportant une partie d'entrée (12) comprenant une masse d'inertie primaire (34), et une partie de sortie (20) montée de manière rotative par rapport à cette partie d'entrée (12) de manière limitée à l'encontre de l'action d'au moins un accumulateur d'énergie (30), en particulier d'un ressort en arc (32), laquelle partie de sortie comprend une masse d'inertie secondaire (38), ledit au moins un accumulateur d'énergie (30) étant enveloppé par la partie d'entrée (12) avec formation d'un canal (42) s'étendant radialement dans la direction de l'accumulateur d'énergie (30), et une bride (40) de la partie de sortie (20) s'étendant à travers le canal (40) jusqu'à une extrémité de l'accumulateur d'énergie (30), et une membrane d'étanchéité (44) étant prévue dans ce canal (40) entre la bride (40) et une partie (36), tournée vers la masse d'inertie secondaire (38), de la partie d'entrée (12), laquelle partie encapsule l'accumulateur d'énergie (30) de manière étanche, **caractérisé en ce que** la membrane d'étanchéité (44) est reliée par liaison de matière à la partie (36), tournée vers la masse d'inertie secondaire (38), de la partie d'entrée (12) et s'appuie contre une bague de friction (48) fixée à la bride (40) ou directement contre la bride (40).

2. Volant d'inertie à deux masses selon la revendication 1, **caractérisé en ce que** la région de la liaison de matière (46) entre la membrane d'étanchéité (44) et la partie (36) tournée vers la masse d'inertie secondaire (38) est située radialement plus à l'extérieur que la région d'appui de la membrane d'étanchéité (44) contre la bague de friction (48) ou contre la bride (40).

3. Volant d'inertie à deux masses selon la revendication 1 ou 2, **caractérisé en ce que** la partie (36) tournée vers la masse d'inertie secondaire (38) comprend des ouvertures partielles en dessous de la membrane d'étanchéité (44).

4. Volant d'inertie à deux masses selon l'une des revendications 1 à 3, **caractérisé en ce qu'**un dispositif de palier (22) pour le support sur palier de la partie de sortie (20) comprend un palier lisse (26) et une bague de friction axiale (58) constituée d'une matière synthétique de haute résistance, en particulier d'un polyétheréthercétone.

5. Volant d'inertie à deux masses selon l'une des revendications 1 à 3, **caractérisé en ce que** le dispositif de palier (22) pour le support sur palier de la partie de sortie (20) est réalisé sous forme de palier lisse (26), lequel forme lui-même une surface d'appui axiale pour le support axial.

6. Volant d'inertie à deux masses selon l'une des revendications 1 à 5, **caractérisé en ce qu'**entre la partie d'entrée (12) et la partie de sortie (20) est réalisée au moins une structure d'entrée en prise (55), une butée de l'une de ces deux parties (12, 20) venant en prise avec une structure conjuguée de l'autre de ces deux parties (20, 12) pour l'entraînement en rotation lorsqu'une course effective de l'accumulateur d'énergie (30) est dépassée.

7. Volant d'inertie à deux masses selon l'une des revendications 1 à 6, **caractérisé en ce que** la partie d'entrée (12) comprend un élément (18) qui est situé radialement en regard de la bride (40) ou de la masse d'inertie secondaire (38), et une distance radiale (A) entre l'élément (18) d'une part et la bride (40) et/ou la masse d'inertie secondaire (38) d'autre part est comprise entre 0,3 mm et 1,0 mm.

8. Volant d'inertie à deux masses selon l'une des revendications 1 à 7, **caractérisé par** au moins une marque de couleur (56) sensible à la température, en particulier dans le canal (42) et/ou sur le dispositif de palier (22) .

9. Volant d'inertie à deux masses selon l'une des revendications 1 à 8, **caractérisé par** au moins un ressort d'amortissement et/ou au moins un dispositif de limitation de poussée entre la masse d'inertie secondaire (38) et la partie (36), tournée vers la masse d'inertie secondaire (38), de la partie d'entrée (12).

10. Dispositif de transmission de couple, en particulier embrayage à friction, **caractérisé par** un volant d'inertie à deux masses (10) selon l'une des revendications 1 à 9.
